# EUROPÄISCHE PATENTSCHRIFT

(11) **EP 3 957 143 B1**
(45) Veröffentlichungstag und Bekanntmachung des Hinweises auf die Patenterteilung: **03.01.2024**
(21) Anmeldenummer: 21181170.8
(22) Anmeldetag: 23.06.2021
(51) Int. Cl.: A01B 69/00, A01B 69/04, A01B 79/00, A01D 41/127

(54) **LANDWIRTSCHAFTLICHE ARBEITSMASCHINE**
AGRICULTURAL MACHINE
MACHINE AGRICOLE

(30) Priorität: 20.08.2020 DE 102020121857
(43) Veröffentlichungstag der Anmeldung: 23.02.2022
(73) Patentinhaber: CLAAS Selbstfahrende Erntemaschinen GmbH, 33428 Harsewinkel (DE)
(72) Erfinder: Fischer, Frédéric, 59759 Arnsberg (DE); Barther, Marvin, 33161 Hövelhof (DE); Heufekes, Maik, 48145 Münster (DE); Neitemeier, Dennis, 59510 Lippetal (DE); Redenius, Jannik, 32361 Pr. Oldendorf (DE); Skiba, Andreas, 33647 Bielefeld (DE)
(74) Vertreter: CLAAS Gruppe

(56) Entgegenhaltungen:
- EP-A1- 3 299 996
- EP-A1- 3 466 239
- WO-A1-2020/023745
- CN-A- 110 799 030
- DE-A1-102017 122 711
- US-B2- 10 747 999

## Beschreibung

Die Erfindung betrifft eine landwirtschaftliche Arbeitsmaschine mit einem Sensorsystem, wobei das Sensorsystem zumindest ein LIDAR und eine Kamera umfasst.

Aus der DE102016118237A ist eine landwirtschaftliche Arbeitsmaschine mit einem Bildverarbeitungssystem bekannt. Das Bildverarbeitungssystem verarbeitet Umgebungsbilder von einem oder mehreren optischen Sensoren. Weitere bekannte landwirtschaftliche Arbeitsmaschinen mit Sensorsystemen sind in den Dokumenten DE 10 2017 122711 A1, EP 3 466 239 A1, WO 2020/023745 A1 und EP 3 299 996 A1 beschrieben.

Es ist Aufgabe der Erfindung den Stand der Technik weiterzubilden.

Diese Aufgabe wird erfindungsgemäß durch die kennzeichnenden Merkmale des Anspruchs 1 gelöst.

Die Erfindung umfasst eine landwirtschaftliche Arbeitsmaschine mit einem Sensorsystem gemäß dem Gegenstand des Anspruchs 1.

Landwirtschaftliche Arbeitsmaschinen im Sinne der Erfindung sind insbesondere selbstfahrende Arbeitsmaschinen wie Mähdrescher, Feldhäcksler und Traktoren. Lidarsensor und/oder Kamera können dabei jeweils an der Maschine selbst, an einem Anbaugerät oder einem gezogenen Arbeitsgerät angebracht sein. Es versteht sich, dass auch mehrere Lidarsensoren und/oder Kameras an unterschiedlichen Stellen angebracht sein können. Lidarsensoren und Kameras, die denselben Umfeldbereich der Arbeitsmaschine erfassen können dabei beliebig angebracht sein. Wichtig ist, dass die Geometrie der Erfassungsbereiche von Lidarsensor und Kamera bekannt ist, damit aus den Bilddaten Daten ausgewählt werden können, die in einem mehrdeutig klassifizierten Segment der Sensordaten liegen.

Wichtig ist, dass zunächst die Sensordaten des Lidarsensors verarbeitet werden. Solche Sensordaten lassen sich im Allgemeinen mit wesentlich weniger Rechenaufwand verarbeiten als Bilddaten einer Kamera. Die Klassifizierung basierend auf den Sensordaten ist allerdings nicht immer eindeutig, bspw. können Fehlstellen im Getreide nicht eindeutig von Lagergetreide unterschieden werden oder hohe Disteln können nicht von Metallstangen auf dem Feld unterschieden werden. In diesen mehrdeutigen Fällen werden Bilddaten für dieses Segment ausgewertet und die Klassifizierung des Segmentes basierend auf den Bilddaten verbessert. Die Rechenleistung zur Analyse der Bilddaten muss also nur für wenige Daten aufgebracht werden. Zum einen nur für Segment bei denen die Klassifizierung des Sensordaten mehrdeutig ist und zum anderen müssen die Bilddaten nur einen Teil des Segmentes abdecken. Ein Segment wird durch die Klassifizierung nur einer Klasse zugeordnet, daher müssen die Bilddaten nur für eine Klassifizierung ausreichen. Vorteil ist, dass die Rechenleistung, von der für die Analyse von Bilddaten wesentlich mehr benötigt wird als für die Analyse von Sensordaten, wesentlich effizienter genutzt wird.

In einer vorteilhaften Ausgestaltung liegen die Sensordaten als Punktwolke vor und jedem Datenpunkt ist ein Entfernungswert zugeordnet, wobei die Recheneinheit dazu vorgesehen und eingerichtet ist die Sensordaten anhand der Entfernungswerte zu segmentieren und/oder zu klassifizieren. Aus den Entfernungswerten lassen sich geometrische Eigenschaften der Punktwolke bestimmen. Bspw. lassen sich flache Bereiche wie Felder und Straßen von Objekten wie Büschen und Felsen unterscheiden.

In einer weiteren vorteilhaften Ausgestaltung liegen die Sensordaten als Punktwolke vor und jedem Datenpunkt ist ein Intensitätswert zugeordnet, wobei die Recheneinheit dazu vorgesehen und eingerichtet ist die Sensordaten anhand der Intensitätswerte zu segmentieren und/oder zu klassifizieren. Über die Intensität kann bspw. eine asphaltierte Straße von einer Wiese unterschieden werden und die Datenpunkte können in unterschiedliche Segmente eingeteilt werden.

In einer vorteilhaften Ausgestaltung ist die Kamera als Infrarotkamera, als Monochromkamera, als Farbkamera oder als Multispektralkamera ausgestaltet. Je nach Einsatzgebiet können unterschiedliche spektrale Wellenlängen nützlich bei der Klassifizierung sein. Weitere Vorteile ergeben sich durch eine Kamera die mehrere Wellenlängen zugleich aufzeichnet. Eine Multispektralkamera nimmt Wellenlängen sowohl im sichtbaren Bereich als auch im infraroten und/oder UV-Bereich auf.

In einer vorteilhaften Ausgestaltung ist die Recheneinheit dazu vorgesehen und eingerichtet auf die Sensordaten einen Median-Filter anzuwenden und die gefilterten Sensordaten zu segmentieren. Durch den Medianfilter können um Ausreißer aus den Sensordaten entfernt werden. Ausreißer werden auch als Salt-And-Pepper-Rauschen bezeichnet.

In einer vorteilhaften Ausgestaltung umfasst die landwirtschaftliche Arbeitsmaschine ein Fahrassistenzsystem und das Fahrassistenzsystem berücksichtigt die Klassifizierung der Segmente. Dass Fahrassistenzsystem kann bspw. ein Lenksystem sein, dass die Arbeitsmaschine entlang als Fahrspuren klassifizierten Segmenten führt. Das Fahrassistenzsystem kann auch ein Sicherheitssystem sein, dass die Arbeitsmaschine vor als Hindernis klassifizierten Segmenten stoppt.

In einer vorteilhaften Ausgestaltung umfasst die landwirtschaftliche Arbeitsmaschine eine Anzeigeeinheit, wobei die Anzeigeeinheit zumindest einen Teil der Klassifizierungen der Segmente darstellt. Die Anzeigeeinheit kann insbesondere als Hindernisse klassifizierte Segmente anzeigen und den Fahrer so auf diese hinweisen. Zusätzlich zur Klassifizierung können auch die Bilddaten und/oder die Sensordaten angezeigt werden. Insbesondere bei gleichzeitiger Anzeige von Bilddaten und Klassifizierung kann der Fahrer sehr leicht erkennen welches Objekt wie klassifiziert wurde.

Neben der Arbeitsmaschine betrifft die Erfindung ein Verfahren zum Klassifizieren von Sensordaten, wobei in einem ersten Schritt Sensordaten eines Lidarsensors in Segmente segmentiert und die Segmente klassifiziert werden, und in einem zweiten Schritt einem mehrdeutig klassifizierten Segment Bilddaten einer Kamera zugeordnet werden und die Klassifizierung des Segments anhand der zugeordneten Bilddaten verbessert wird, wobei der Sensor und die Kamera zumindest teilweise denselben Bereich erfassen, wobei die Bilddaten zumindest einen Teil desselben Bereichs wie das Segment zeigen.

Sensordaten von Lidarsensoren lassen sich im Allgemeinen mit wesentlich weniger Rechenaufwand verarbeiten als Bilddaten einer Kamera. Die Klassifizierung basierend auf den Sensordaten ist allerdings nicht immer eindeutig, bspw. können Fehlstellen im Getreide nicht eindeutig von Lagergetreide unterschieden werden oder hohe Disteln können nicht von Metallstangen auf dem Feld unterschieden werden. In diesen mehrdeutigen Fällen werden Bilddaten für dieses Segment ausgewertet und die Klassifizierung des Segmentes basierend auf den Bilddaten verbessert. Die Rechenleistung zur Analyse der Bilddaten muss also nur für wenige Daten aufgebracht werden. Zum einen nur für Segment bei denen die Klassifizierung des Sensordaten mehrdeutig ist und zum anderen müssen die Bilddaten nur einen Teil des Segmentes abdecken. Ein Segment wird durch die Klassifizierung nur einer Klasse zugeordnet, daher müssen die Bilddaten nur für eine Klassifizierung ausreichen. Vorteil ist, dass die Rechenleistung, von der für die Analyse von Bilddaten wesentlich mehr benötigt wird als für die Analyse von Sensordaten, wesentlich effizienter genutzt wird.

In einer vorteilhaften Ausgestaltung liegen die Sensordaten als Punktwolke vor und jedem Datenpunkt ist ein Entfernungswert zugeordnet, wobei die Sensordaten anhand der Entfernungswerte segmentiert und/oder klassifiziert werden. Aus den Entfernungswerten lassen sich geometrische Eigenschaften der Punktwolke bestimmen. Geometrische Objekte können so als Segment erkannt und/oder klassifiziert werden. Geometrisch können bspw. Datenpunkte zu einem Segment zusammengefasst werden, die im Wesentlichen eine Ebene bilden.

In einer weiteren Ausgestaltung liegen die Sensordaten als Punktwolke vor und jedem Datenpunkt ist ein Intensitätswert zugeordnet, wobei die Sensordaten anhand der Intensitätswerte segmentiert und/oder zu klassifiziert werden. Die Intensität hängt vom Material und/oder der Oberfläche des erfassten Objektes ab. Über die Intensität können daher Objekte unterschieden und die entsprechenden Datenpunkte segmentiert und/oder klassifiziert werden.

In einer vorteilhaften Ausgestaltung wird auf die Sensordaten ein Median-Filter angewendet und die gefilterten Sensordaten werden segmentiert. Durch den Medianfilter können um Ausreißer aus den Sensordaten entfernt werden. Ausreißer werden auch als Salt-And-Pepper-Rauschen bezeichnet.

In einer vorteilhaften Ausgestaltung wird die Klassifikation der Segmente für ein Fahrassistenzsystem genutzt. Dass Fahrassistenzsystem kann bspw. ein Lenksystem sein, dass die Arbeitsmaschine entlang als Fahrspuren klassifizierten Segmenten führt. Das Fahrassistenzsystem kann auch ein Sicherheitssystem sein, dass die Arbeitsmaschine vor als Hindernis klassifizierten Segmenten stoppt.

Die Erfindung wird nachfolgend an mehreren in den Figuren dargestellten Beispielen erläutert. Es zeigen:
- Figur 1: einen Mähdrescher mit einem Lidarsensor und einer Kamera,
- Figur 2: einen Ablaufplan
- Figur 3: eine Punktwolke
- Figur 4: eine Anzeige

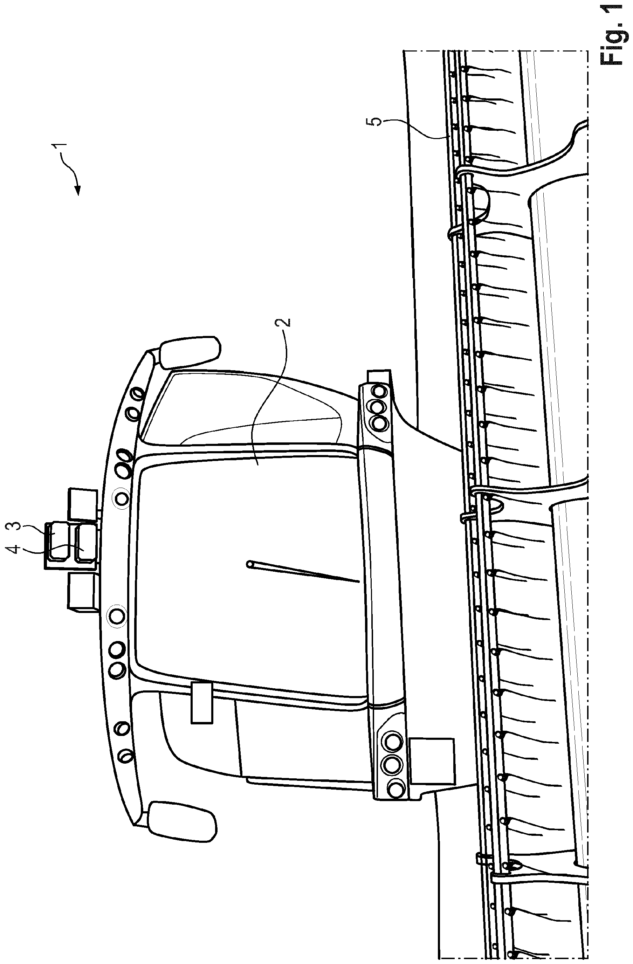

In Figur 1 ist eine landwirtschaftliche Arbeitsmaschine 1 in Form eines Mähdreschers dargestellt. Der Mähdrescher 1 umfasst eine Fahrerkabine 2. Am vorderen Dach der Fahrerkabine 2 sind ein Lidarsensor 3 und eine Kamera 4 angebracht. Lidarsensor 3 und Kamera 4 sind auf das Umfeld der Arbeitsmaschine 1, hier auf den Bereich direkt vor der Haspel 5 des Mähdreschers, ausgerichtet. In der Fahrerkabine ist eine Anzeigeeinheit vorhanden. Die Anzeigeeinheit kann dem Fahrer die Klassifizierungen der Segmente anzeigen. Zusätzlich zu den Klassifizierungen können die Bilddaten und/oder die Sensordaten angezeigt werden.

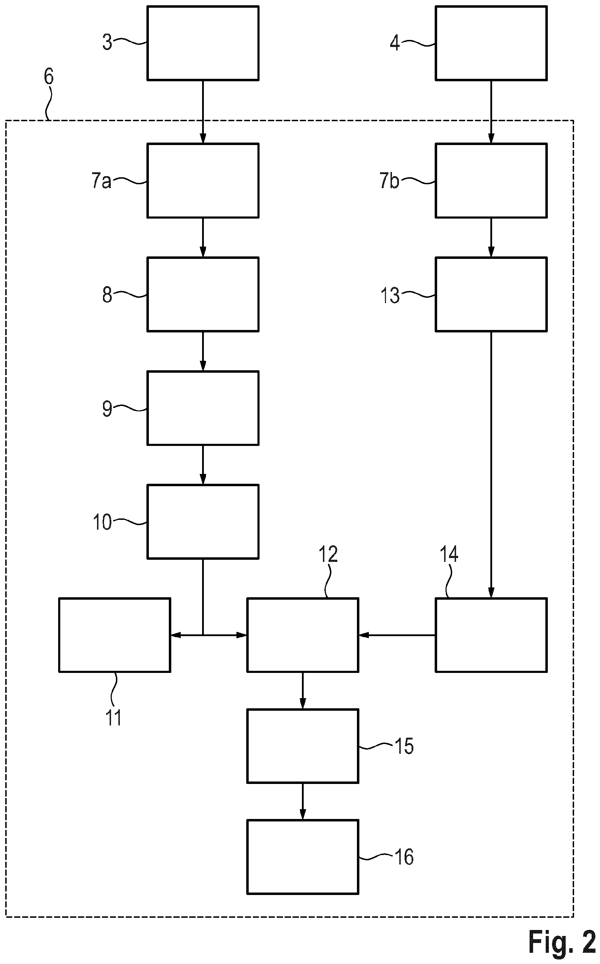

Figur 2 zeigt einen Ablaufplan eines erfindungsgemäßen Verfahrens. Ein Lidarsensor 3 übermittelt Sensordaten an eine Recheneinheit 6. Eine Kamera 4 übermittelt Bilddaten an die Recheneinheit 6. In einem optionalen Vorverarbeitungsschritt 7a werden die Sensordaten vorverarbeitet. Zur Vorverarbeitung gehört bspw. die Anwendung von Filtern wie einem Medianfilter zur Entfernung von Ausreißern. Eine andere Vorverarbeitung wird in einem optionalen Vorverarbeitungsschritt 7b auf die Bilddaten angewendet. Auf die Bilddaten wird bspw. eine Intensitätsnormierung und/oder eine Farbnormierung angewendet. Die Sensordaten werden dann von der Recheneinheit 6 segmentiert 8. Die Sensordaten liegen als Punktwolke vor und werden nach Geometrie und/oder Intensität segmentiert. Von jedem Segment werden von der Recheneinheit 6 Eigenschaften, sogenannte Feature, berechnet 9. Die Feature können sich bspw. auf die erkannte geometrische Form, die Intensität, die Intensitätsverteilung und/oder den Abstand zum Sensor beziehen. Basierend auf den berechneten Features werden die Segmente dann von der Recheneinheit 6 nachfolgend klassifiziert 10. Die Klassifizierung 10 ordnet jedem Segment eine oder mehrere Klassen zu. Bei der Klassifizierung 10 können neben den Features auch andere Informationen berücksichtigt werden. Bspw. können Feature von Segmenten, die an das zu klassifizierende Segment angrenzen, beachtet werden. Klassifizierungen erfolgen typischerweise basierend auf Wahrscheinlichkeiten. Wenn die Wahrscheinlichkeit für ein Segment einer bestimmten Klasse zuzugehören einen ersten Schwellwert überschreitet wird die Klassifizierung als eindeutig angesehen. Überschreitet keine Wahrscheinlichkeit den ersten Schwellwert, aber mehrere Wahrscheinlichkeiten einen zweiten Schwellwert, so wird die Klassifizierung als mehrdeutig angesehen. Für Segmente mit eindeutiger Klassifizierung 11 ist die Verarbeitung beendet. Für Segmente mit mehrdeutiger Klassifizierung 12, also Segmente die nicht eindeutig einer Klasse zugeordnet wurden, werden die Bilddaten analysiert. Die Bilddaten werden zunächst in das Koordinatensystem der Sensordaten transformiert 13. Für ein mehrdeutig klassifiziertes Segment werden dem Segment zugehörige Bilddaten ausgewählt 14. Für diese Bilddaten werden, wie zuvor für die Sensordaten, Eigenschaften berechnet 15. Die Art der Eigenschaften hängen von der Kamera und damit von den in den Bilddaten verfügbaren Informationen ab. Basierend auf den Eigenschaften der Bilddaten und der mehrdeutigen Klassifizierung der Sensordaten wird das Segment erneut klassifiziert 16. Es werden also für alle Sensordaten, aber nur für einen Teil der Bilddaten, Eigenschaften berechnet. Da die Berechnung der Eigenschaften der Bilddaten einen wesentlichen größeren Rechenaufwand erfordert als die Berechnung der Eigenschaften der Sensordaten wird die benötigte Rechenleistung der Recheneinheit 6 verringert.

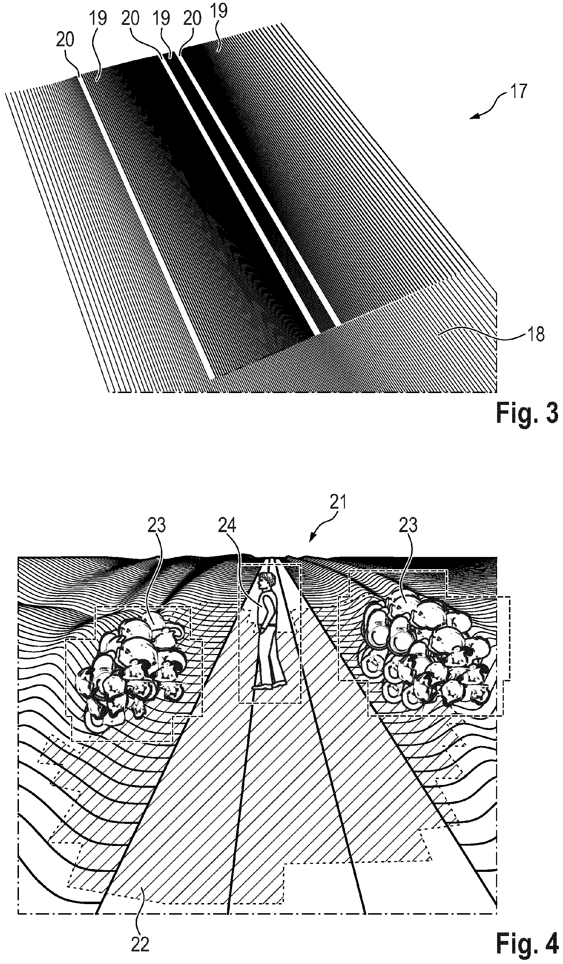

Figur 3 zeigt eine Punktwolke 17 von Sensordaten. Ein erster Teil der Punktwolke 17 bildet eine erste Ebene 18 und wird als ein Segment behandelt. Ein zweiter Teil der Punktwolke 17 bildet eine höher gelegene Ebene 19. Die höher gelegene Ebene 19 wird durch tiefer gelegene Bereiche 20 unterbrochen, daher wird die höher gelegene Ebene als drei Segmente behandelt. Der Abstand zwischen der ersten Ebene 18 und der höher gelegenen Ebene 19 entspricht der erwarteten Höhe des Erntebestands, daher wird die höher gelegene Ebene 19 als Erntebestand klassifiziert. Die tiefer gelegenen Bereiche 20 im Erntegut entsprechen der Geometrie von Fahrspuren, daher werden die tiefer gelegenen Bereiche 20 als Fahrspuren klassifiziert. Die Klassifizierungen von Erntebestand und Fahrspuren sind eindeutig. Die Klassifizierung der ersten Ebene 18 ist mehrdeutig. Der Bereich könnte sowohl abgearbeitetes Stoppelfeld als auch Lagergetreide sein. Mittels Analyse von Bilddaten, die einen Teil der erstem Ebene 18 abdecken wir die Klassifizierung des Segmentes eindeutig. In den Bilddaten können Stoppelfelder von Lagergetreide unterschieden werden. Durch die Unterscheidung zwischen Stoppelfeld und Lagergetreide kann das Fahrassistenzsystem die Fahrgeschwindigkeit der Arbeitsmaschine besser steuern. Bei der Fahrt über Lagergetreide wird wegen der Aufnahme und Verarbeitung des Getreides wesentlich mehr Energie benötigt als bei der Fahrt über Stoppelfeld. Daher kann das Fahrassistenzsystem bei der Fahrt über Stoppelfeld der Arbeitsmaschine eine wesentlich höhere Fahrgeschwindigkeit vorgeben.

Figur 4 zeigt eine Anzeige 21 wie sie von einer Anzeigeeinheit in der Fahrerkabine angezeigt werden kann. Die Anzeige zeigt die Bilddaten von der Kamera. Darüber wird die Klassifizierung der Segmente angezeigt. Einige Segmente bilden eine flache Ebene 22. Die flache Ebene 22 kann durch die Analyse der Sensordaten nur mehrdeutig klassifiziert werden. Nach der Analyse der Bilddaten wir die Ebene 22 als Fahrweg klassifiziert. Andere Segmente 23, 24 stehen annähernd senkrecht auf der Ebene 22. Die senkrechten Segmente 23, 24 werden nach Analyse der Sensordaten als Hindernis klassifiziert. Die Klassifikation als Hindernis ist mehrdeutig, da es unterschiedliche Hindernisse gibt. Die Klassifikation ist allerdings ausreichend für ein Fahrassistenzsystem, dass die Maschine an Hindernissen vorbei führt oder vor Hindernissen stoppt. Indem die Mehrdeutige Klassifikation dem Fahrassistenzsystem zur Verfügung gestellt wird, ist eine schnellere Reaktion möglich, als wenn zuerst die Analyse der Bilddaten erfolgt. Nach Analyse der Bilddaten werden die senkrechten Segmente 23, 24 als Büsche 23 und Mensch 24 klassifiziert. Durch die genauere Analyse ist das Fahrassistenzsystem besser in der Lage auf das Umfeld der Arbeitsmaschine zu reagieren. Das Fahrassistenzsystem kann mit einem automatischen Lenksystem die Arbeitsmaschine an den Büschen vorbeiführen oder mit einem Eingriff ins Lenksystem vor dem Menschen stoppen. Durch die Unterscheidung zwischen Büschen und Menschen kann das System bei Menschen mit Bewegungen rechnen und bei Büschen von stationären Hindernissen ausgehen. Die unterschiedlichen Klassifikationen können bspw. mit unterschiedlichen Farben dargestellt werden. So können bspw. Fahrwege 22 grün und Hindernisse 23, 24 rot dargestellt werden.

### Bezugszeichenliste:

- 1: Landwirtschaftliche Arbeitsmaschine
- 2: Fahrerkabine
- 3: Lidarsensor
- 4: Kamera
- 5: Haspel
- 6: Recheneinheit
- 7a: Vorverarbeitungsschritt
- 7b: Vorverarbeitungsschritt
- 8: Segmentierung
- 9: Featureberechnung
- 10: Klassifizierung
- 11: Eindeutige Klassifizierung
- 12: Mehrdeutige Klassifizierung
- 13: Transformation
- 14: Auswahl
- 15: Featureberechnung
- 16: Klassifizierung
- 17: Punktwolke
- 18: Erste Ebene
- 19: Höher gelegene Ebene
- 20: Tiefer gelegene Bereiche
- 21: Anzeige
- 22: Fahrweg
- 23: Hindernis, Busch
- 24: Hindernis, Mensch

## Patentansprüche

1. Landwirtschaftliche Arbeitsmaschine (1) mit einem Sensorsystem,
wobei das Sensorsystem zumindest einen Lidarsensor (3), eine Kamera (4) und eine Recheneinheit (6) umfasst,
wobei der Lidarsensor (3) und die Kamera (4) jeweils einen Umfeldbereich der Arbeitsmaschine (1) erfassen,
wobei der Lidarsensor (3) und die Kamera (4) zumindest teilweise denselben Umfeldbereich der Arbeitsmaschine (1) erfassen,
wobei der Lidarsensor (3) Sensordaten an die Recheneinheit (6) überträgt und die Kamera (4) Bilddaten an die Recheneinheit (6) überträgt,
**dadurch gekennzeichnet, dass** die Recheneinheit (6) dazu vorgesehen und eingerichtet ist die Sensordaten des Lidarsensors (3) in Segmente zu segmentieren (8) und die Segmente zu klassifizieren (10),
wobei die Recheneinheit (6) dazu vorgesehen und eingerichtet ist zumindest einem mehrdeutig klassifizierten Segment (12) der Sensordaten des Lidarsensors (3) Bilddaten der Kamera (4) zuzuordnen und die Klassifizierung des Segments der Sensordaten des Lidarsensors (3) anhand der Bilddaten der Kamera (4) zu verbessern (16),
wobei die Bilddaten der Kamera (4) zumindest einen Teil desselben Umfeldbereichs der Arbeitsmaschine (1) wie das mehrdeutig klassifizierte Segment (12) zeigen.

2. Landwirtschaftliche Arbeitsmaschine (1) nach Anspruch 1,
**dadurch gekennzeichnet, dass**
die Sensordaten als Punktwolke (17) vorliegen und jedem Datenpunkt ein Entfernungswert zugeordnet ist, wobei die Recheneinheit (6) dazu vorgesehen und eingerichtet ist die Sensordaten anhand der Entfernungswerte zu segmentieren (8) und/oder zu klassifizieren (10).

3. Landwirtschaftliche Arbeitsmaschine (1) nach einem der vorhergehenden Ansprüche,
**dadurch gekennzeichnet, dass**
die Sensordaten als Punktwolke (17) vorliegen und jedem Datenpunkt ein Intensitätswert zugeordnet ist, wobei die Recheneinheit (6) dazu vorgesehen und eingerichtet ist die Sensordaten anhand der Intensitätswerte zu segmentieren (8) und/oder zu klassifizieren (10).

4. Landwirtschaftliche Arbeitsmaschine (1) nach einem der vorhergehenden Ansprüche,
**dadurch gekennzeichnet, dass**
die Kamera (4) als Infrarotkamera, als Monochromkamera, als Farbkamera oder als Multispektralkamera ausgestaltet ist.

5. Landwirtschaftliche Arbeitsmaschine (1) nach einem der vorhergehenden Ansprüche,
**dadurch gekennzeichnet, dass**
die Recheneinheit (6) dazu vorgesehen und eingerichtet ist auf die Sensordaten einen Median-Filter anzuwenden (7a) und die gefilterten Sensordaten zu segmentieren (8).

6. Landwirtschaftliche Arbeitsmaschine (1) nach einem der vorhergehenden Ansprüche,
**dadurch gekennzeichnet, dass**
die landwirtschaftliche Arbeitsmaschine (1) ein Fahrassistenzsystem umfasst und das Fahrassistenzsystem die mehrdeutige (12) und/oder eindeutige Klassifizierung (11) der Segmente berücksichtigt.

7. Landwirtschaftliche Arbeitsmaschine (1) nach einem der vorhergehenden Ansprüche,
**dadurch gekennzeichnet, dass**
die landwirtschaftliche Arbeitsmaschine (1) eine Anzeigeeinheit umfasst, wobei die Anzeigeeinheit zumindest einen Teil der Klassifizierungen (11, 12, 16) der Segmente darstellt.

8. Landwirtschaftliche Arbeitsmaschine (1) nach Anspruch 7,
**dadurch gekennzeichnet, dass**
zusätzlich zur Klassifizierung (11, 12, 16) die Bilddaten und/oder die Sensordaten dargestellt werden.

9. Verfahren zum Klassifizieren von Sensordaten,
wobei zunächst Sensordaten eines Lidarsensors (3) in Segmente segmentiert (8) und die Segmente klassifiziert (10) werden,
und nachfolgend einem mehrdeutig klassifizierten Segment (12) Bilddaten einer Kamera (4) zugeordnet werden und die Klassifizierung (12) des Segments anhand der zugeordneten Bilddaten verbessert wird (16),
wobei der Lidarsensor (3) und die Kamera (4) zumindest teilweise denselben Bereich erfassen, wobei die Bilddaten zumindest einen Teil desselben Bereichs wie das mehrdeutig klassifizierte Segment (12) zeigen.

10. Verfahren nach Anspruch 9, **dadurch gekennzeichnet, dass** die Sensordaten als Punktwolke (17) vorliegen und jedem Datenpunkt ein Entfernungswert zugeordnet ist, wobei die Sensordaten anhand der Entfernungswerte segmentiert (8) und/oder klassifiziert (10) werden.

11. Verfahren nach Anspruch 9 oder 10, **dadurch gekennzeichnet, dass** die Sensordaten als Punktwolke (17) vorliegen und jedem Datenpunkt ein Intensitätswert zugeordnet ist, wobei die Sensordaten anhand der Intensitätswerte segmentiert (8) und/oder zu klassifiziert (10) werden.

12. Verfahren nach einem der Ansprüche 9 bis 11, **dadurch gekennzeichnet, dass** auf die Sensordaten ein Median-Filter angewendet wird (7a) und die gefilterten Sensordaten segmentiert (8) werden.

13. Verfahren nach einem der Ansprüche 9 bis 12. **dadurch gekennzeichnet, dass** die Klassifikation (11, 12, 16) der Segmente für ein Fahrassistenzsystem genutzt wird.

## Claims

1. An agricultural harvesting machine (1) with a sensor system,
wherein the sensor system comprises at least one LiDAR sensor (3), a camera (4) and a processing unit (6),
wherein the LiDAR sensor (3) and the camera (4) respectively detect a surrounding area of the working machine (1), wherein the LiDAR sensor (3) and the camera (4) detect at least a portion of the same surrounding area of the working machine (1),
wherein the LiDAR sensor (3) transfers sensor data to the processing unit (6) and the camera (4) transfers image data to the processing unit (6),
**characterized in that** the processing unit (6) is provided and configured to segment (8) the sensor data from the LiDAR sensor (3) into segments and to classify (10) the segments, wherein the processing unit (6) is provided and configured to associate image data from the camera (4) with at least one ambiguously classified segment (12) of the sensor data from the LiDAR sensor (3) and to enhance the classification of the segment of the sensor data from the LiDAR sensor (3) with the aid of the image data from the camera (4),
wherein the image data from the camera (4) show at least a portion of the same surrounding area of the working machine (1) as the ambiguously classified segment (12).

2. The agricultural working machine (1) according to claim 1,
**characterized in that**
the sensor data are present as a point cloud (17) and a distance value is associated with each data point, wherein the processing unit (6) is provided and configured to segment (8) and/or to classify (10) the sensor data with the aid of the distance values.

3. The agricultural working machine (1) according to one of the preceding claims, **characterized in that**
the sensor data are present as a point cloud (17) and an intensity value is associated with each data point, wherein the processing unit (6) is provided and configured to segment (8) and/or to classify (10) the sensor data with the aid of the intensity values.

4. The agricultural working machine (1) according to one of the preceding claims, **characterized in that**
the camera (4) is equipped as an infrared camera, as a monochrome camera, as a colour camera or as a multispectral camera.

5. The agricultural working machine (1) according to one of the preceding claims, **characterized in that**
the processing unit (6) is provided and configured to apply (7a) a median filter to the sensor data and to segment (8) the filtered sensor data.

6. The agricultural working machine (1) according to one of the preceding claims, **characterized in that**
the agricultural working machine (1) comprises a driver assistance system and the driver assistance system takes the ambiguous (12) and/or unambiguous classification (11) of the segments into consideration.

7. The agricultural working machine (1) according to one of the preceding claims, **characterized in that**
the agricultural working machine (1) comprises a display unit, wherein the display unit depicts at least a portion of the classification (11, 12, 16) of the segments.

8. The agricultural working machine (1) according to claim 7,
**characterized in that**
the image data and/or the sensor data are depicted in addition to the classification (11, 12, 16).

9. A method for classifying sensor data,
wherein firstly, sensor data from a LiDAR sensor (3) are segmented (8) into segments and the segments are classified (10),
and next, image data from a camera (4) are associated with an ambiguously classified segment (12) and the classification (12) of the segment is improved (16) with the aid of the associated image data,
wherein the LiDAR sensor (3) and the camera (4) detect at least a portion of the same area, wherein the image data show at least a portion of the same area as the ambiguously classified segment (12).

10. The method according to claim 9, **characterized in that** the sensor data are present as a point cloud (17) and a distance value is associated with each data point, wherein the sensor data are segmented (8) and/or classified (10) with the aid of the distance values.

11. The method according to claim 9 or claim 10, **characterized in that** the sensor data are present as a point cloud (17) and an intensity value is associated with each data point, wherein the sensor data are segmented (8) and/or classified (10) with the aid of the intensity values.

12. The method according to one of claims 9 to 11, **characterized in that** a median filter is applied (7a) to the sensor data and the filtered sensor data are segmented (8).

13. The method according to one of claims 9 to 12, **characterized in that** the classification (11, 12, 16) of the segments is used for a driver assistance system.

## Revendications

1. Machine de travail agricole (1) comprenant un système de capteur,
le système de capteur comportant au moins un capteur Lidar (3), une caméra (4) et une unité de calcul (6),
le capteur Lidar (3) et la caméra (4) détectant respectivement une zone de l'environnement de la machine de travail (1),
le capteur Lidar (3) et la caméra (4) détectant au moins en partie la même zone de l'environnement de la machine de travail (1),
le capteur Lidar (3) transmettant des données de capteur à l'unité de calcul (6), et la caméra (4) transmettant des données d'image à l'unité de calcul (6),
**caractérisée en ce que** l'unité de calcul (6) est prévue et conçue pour segmenter (8) les données de capteur du capteur Lidar (3) en segments et pour classifier (10) les segments,
l'unité de calcul (6) étant prévue et conçue pour associer des données d'image de la caméra (4) à au moins un segment (12), classifié de manière équivoque, des données de capteur du capteur Lidar (3), et pour améliorer (16) la classification du segment des données de capteur du capteur Lidar (3) à l'aide des données d'image de la caméra (4),
les données d'image de la caméra (4) montrant au moins une partie de la même zone de l'environnement de la machine de travail (1) que le segment (12) classifié de manière équivoque.

2. Machine de travail agricole (1) selon la revendication 1, **caractérisée en ce que** les données de capteur sont présentes sous forme de nuage de points (17) et qu'une valeur de distance est associée à chaque point de données, l'unité de calcul (6) étant prévue et conçue pour segmenter (8) et/ou classifier (10) les données de capteur à l'aide des valeurs de distance.

3. Machine de travail agricole (1) selon l'une des revendications précédentes, **caractérisée en ce que** les données de capteur sont présentes sous forme de nuage de points (17) et qu'une valeur d'intensité est associée à chaque point de données, l'unité de calcul (6) étant prévue et conçue pour segmenter (8) et/ou classifier (10) les données de capteur à l'aide des valeurs d'intensité.

4. Machine de travail agricole (1) selon l'une des revendications précédentes, **caractérisée en ce que** la caméra (4) est réalisée comme caméra à infrarouges, comme caméra monochrome, comme caméra couleur ou comme caméra multispectrale.

5. Machine de travail agricole (1) selon l'une des revendications précédentes, **caractérisée en ce que** l'unité de calcul (6) est prévue et conçue pour appliquer un filtre médian (7a) aux données de capteur et pour segmenter (8) les données de capteur filtrées.

6. Machine de travail agricole (1) selon l'une des revendications précédentes, **caractérisée en ce que** la machine de travail agricole (1) comprend un système d'assistance à la conduite et que le système d'assistance à la conduite prend en compte la classification équivoque (12) et/ou univoque (11) des segments.

7. Machine de travail agricole (1) selon l'une des revendications précédentes, **caractérisée en ce que** la machine de travail agricole (1) comprend une unité d'affichage, l'unité d'affichage représentant au moins une partie des classifications (11, 12, 16) des segments.

8. Machine de travail agricole (1) selon la revendication 7, **caractérisée en ce que**, en plus de la classification (11, 12, 16), les données d'image et/ou les données de capteur sont représentées.

9. Procédé de classification de données de capteur,
selon lequel des données de capteur d'un capteur Lidar (3) sont d'abord segmentées (8) en segments et les segments sont classifiés (10),
et ensuite des données d'image d'une caméra (4) sont associées à un segment (12) classifié de manière équivoque, et la classification (12) du segment est améliorée (16) à l'aide des données d'image associées,
le capteur Lidar (3) et la caméra (4) détectant au moins en partie la même zone, les données d'image montrant au moins une partie de la même zone que le segment (12) classifié de manière équivoque.

10. Procédé selon la revendication 9, **caractérisé en ce que** les données de capteur sont présentes sous forme de nuage de points (17) et une valeur de distance est associée à chaque point de données, les données de capteur étant segmentées (8) et/ou classifiées (10) à l'aide des valeurs de distance.

11. Procédé selon la revendication 9 ou 10, **caractérisé en ce que** les données de capteur sont présentes sous forme de nuage de points (17) et une valeur d'intensité est associée à chaque point de données, les données de capteur étant segmentées (8) et/ou classifiées (10) à l'aide des valeurs d'intensité.

12. Procédé selon l'une des revendications 9 à 11, **caractérisé en ce qu'**un filtre médian est appliqué (7a) aux données de capteur et les données de capteur filtrées sont segmentées (8).

13. Procédé selon l'une des revendications 9 à 12, **caractérisé en ce que** la classification (11, 12, 16) des segments est utilisée pour un système d'assistance à la conduite.
